(19) Europäisches Patentamt

European Patent Office

Office européen des brevets

(11) EP 0 524 050 B1

(12) **FASCICULE DE BREVET EUROPEEN**

(45) Date de publication et mention
de la délivrance du brevet:
**28.08.1996 Bulletin 1996/35**

(51) Int. Cl.[6]: **C04B 41/91**, C09K 13/02,
C30B 33/00

(21) Numéro de dépôt: **92401908.6**

(22) Date de dépôt: **03.07.1992**

(54) **Dissolution contrôlée du quartz**

Kontrollierten Lösungsgeschwindigkeit von Quartz

Controlled dissolution of quartz

(84) Etats contractants désignés:
**AT BE CH DE DK ES FR GB GR IT LI LU MC NL
PT SE**

(30) Priorité: **19.07.1991 FR 9109170**

(43) Date de publication de la demande:
**20.01.1993 Bulletin 1993/03**

(73) Titulaire: **COMPAGNIE D'ELECTRONIQUE
ET DE PIEZO-ELECTRICITE - C.E.P.E.
F-95100 Argenteuil (FR)**

(72) Inventeurs:
• **Philippot, Etienne
F-92045 Paris La Défense (FR)**
• **Cambon, Olivier
F-92045 Paris La Défense (FR)**
• **Goiffon, Aline
F-92045 Paris La Défense (FR)**
• **Ibanez, Alain
F-92045 Paris La Défense (FR)**
• **Cachau-Hereillat, Danièle
F-92045 Paris La Défense (FR)**

(74) Mandataire: **Guérin, Michel et al
THOMSON-CSF
SCPI
B.P. 329
50, rue Jean-Pierre Timbaud
92402 Courbevoie Cédex (FR)**

(56) Documents cités:
**US-A- 4 626 316**

• **CHEMICAL ABSTRACTS, vol. 112, no. 67, 1990,
Columbus, Ohio, US; abstract no. 146481k, A. S.
SANDHU ET AL 'Effect of nature of the etchant
on anisotropic track etching in quartz'**
• **CHEMICAL ABSTRACTS, vol. 98, 1983,
Columbus, Ohio, US; abstract no. 153771a,
'Quartz oscillators'& JP-A-57176815**
• **PROCEEDINGS OF THE 39:TH ANNUAL
FREQUENCY SYMP. 1985, IEEE CAT. NO.
85CH2186-5 LIBRARY OF CONGRESS NO. 58-
60781, 29-31 MAY 1985 A.J. BERNOT 'Etchin
study of AT-cut cultured quartz using etchants
containing fluoride salts, hydrofluoric acid, and
ammonium bifluoride'**

**Description**

La présente invention résulte de travaux effectués dans le Laboratoire de Physicochimie des Matériaux - U.R.A. D 0407 CNRS de l'Université des Sciences et Techniques du Languedoc.

La présente invention concerne un procédé de dissolution chimique d'un matériau cristallin. Elle s'applique notamment à l'usinage chimique de matériaux piézoélectriques.

La multiplication des dispositifs de radiocommunication dont le dispositif de base est un résonateur piézoélectrique, a provoqué un développement rapide des matériaux piézoélectriques. Le quartz ($SiO_2$) est le matériau le plus utilisé actuellement.

Un résonateur est réalisé à partir d'une lame de matériau piézoélectrique. Sur chaque face principale de la lame, on dépose au moins une électrode. Le résonateur est caractérisé par sa fréquence de résonance. Cette fréquence correspond à une épaisseur bien déterminée de la lame, entre deux électrodes. L'état de surface de la lame doit être aussi bon que possible, pour ne pas perturber la réponse en fréquence du résonateur. Pour donner à la lame l'épaisseur souhaitée, on l'usine au moins dans sa partie centrale. Divers procédés d'usinage sont connus. Plus la fréquence du résonateur est élevée plus l'épaisseur de la lame est faible. A fréquence basse, l'usinage peut être mécanique. La lame est rodée avec un abrasif. Par exemple pour la coupe AT du quartz une épaisseur de 40 micromètres correspond environ à une fréquence de 40 MHz. Pour des fréquences plus élevées, il n'est plus possible de faire un usinage mécanique. On peut utiliser un procédé ionique. La lame est bombardée par des ions d'argon accélérés. Le procédé donne de bons résultats, au point de vue état de surface, mais est onéreux.

On peut aussi utiliser un procédé de dissolution qui utilise, en solution, un solvant du matériau à attaquer. Par exemple une lame de quarts est immergée dans une solution d'acide fluorhydrique (HF) ou de bifluorure d'ammonium 1 ($NH_4HF_2$). Ce procédé est moins coûteux que l'usinage ionique mais il ne donne pas satisfaction au point de vue état de surface et donc du comportement électrique du résonateur.

En effet, les matériaux cristallins n'ont pas une structure parfaite. Ils comportent de façon inévitable des défauts structuraux tels que des dislocations qui affleurent à la surface du matériau. La dissolution par le solvant s'initialise de préférence au niveau des dislocations. Il se forme alors en surface du matériau des piqures ("etch pits" dans la littérature anglo-saxonne). Elles se creusent et se transforment en canaux ("etch channels" dans la littérature anglo-saxonne) qui traversent totalement la lame. En définitive, l'état de surface de la lame ne s'améliore pas. Les piqures et les canaux entraînent de graves perturbations au niveau de la réponse en fréquence du résonateur. Ce procédé ne peut être utilisé qu'avec des lames de haute qualité cristalline issues de cristaux de haute pureté.

Le Brevet US 4 626 316 propose de polir du quartz dans un bain chaud de soude sous pression élevée d'azote.

Pour remédier à ces inconvénients, la présente invention propose un procédé de dissolution contrôlée du quarts permettant d'obtenir un état de surface correct tel que précisé dans la revendication 1. Ce procédé de dissolution est peu onéreux. Il consiste à utiliser un bain d'hydroxyde ou de fluorure d'un alcalin (Lithium, Sodium, Potassium) ou d'hydroxyde d'ammonium, ou un mélange de ces composés. Le bain peut également contenir avantageusement un composé silicié soluble.

On peut y mettre aussi un fluorure d'ammonium.

De préférence, lorsqu'un fluorure alcalin est utilisé, il est mélangé à un hydroxyde de lithium, sodium, potassium ou ammonium, afin de limiter l'agressivité du bain, les fluorures étant beaucoup plus actifs que les hydroxydes.

On a constaté selon l'invention que ce procédé permettait d'obtenir des résultats très satisfaisants avec le quartz. De préférence, la dissolution se fait à une température comprise entre 80°C et 250° et est menée à pression atmosphérique.

Le procédé peut être utilisé pour découper les bords d'une lame de quartz, pour amincir au moins une zone de la lame ou pour creuser au moins une ouverture à travers l'épaisseur de la lame.

Le procédé peut être utilisé pour dissoudre partiellement une lame de quartz, la lame étant alors recouverte d'un masque destiné à en protéger une partie.

Lorsque le quartz est immergé dans un bain susceptible de le dissoudre, il se produit un flux d'entités siliciées vers le bain. Lorsqu'une lame de quartz est immergée dans un bain susceptible de le faire croître, il se produit un flux d'entités du bain vers la lame de quartz. Lorsque les deux flux s'annulent, le bain est dit saturé. Il renferme, dans les conditions de pression et de température de l'expérience, une concentration molaire Co en silicium, élément constitutif du quartz, appelée solubilité. Pour obtenir une croissance contrôlée du quartz, on utilise un bain sursaturé en silicium. Le bain renferme une concentration molaire Cc en silicium supérieure à la concentration molaire Co. Lorsque la concentration molaire Cc est très supérieure à la concentration molaire Co, on enregistre une croissance très rapide et même anarchique du quartz. La croissance n'est plus maîtrisée. Des relations thermodynamiques montrent qu'une bonne croissance du quartz ne peut avoir lieu que lorsque la concentration molaire Cc est plus proche de la concentration molaire Co.

On a remarqué que les phénomènes de croissance et de dissolution de matériaux cristallins sont réciproques.

Selon une variante avantageuse de l'invention, le bain de dissolution contient avant dissolution un solvant du quartz et un matériau silicié soluble. Le bain avant dissolution est "sous-saturé" en silicium. Avant dissolution, la concentration molaire en silicium est inférieure à la concentration molaire en silicium qu'aurait le bain à saturation (dans les conditions de température et de pression de la dissolution).

Les exemples suivants illustreront la mise en oeuvre et les avantages de l'invention.

On a utilisé des lames de quartz sciées dans un bloc, puis rodées avec un abrasif à grains d'environ 3 micromètres. Leur rugosité initiale est de l'ordre de 0,17 micromètre.

D'autres lames ont été polies avec un abrasif à grains d'environ 0,3 micromètre. Leur rugosité initiale est de l'ordre de 0,01 micromètre.

Dans tous les essais réalisés, la rugosité Ra moyenne de l'échantillon a été mesurée avant dissolution, puis de nombreuses fois pendant la dissolution, avec un rugosimètre.

Les mesures ont été faites en plusieurs endroits de la lame sur les deux faces.

Au cours de la dissolution, l'épaisseur de matériau enlevé sur les deux faces de la lame (ou profondeur P de dissolution) est contrôlée en mesurant la fréquence de résonance de la lame.

On peut utiliser par exemple le montage suivant : on immerge dans un bain d'huile, un ballon à trois tubulures contenant le bain de dissolution. La température de ce dernier bain est homogénéisée par agitation magnétique. Une des tubulures contient un thermocouple qui contrôle la température du bain. La plage des températures est comprise de préférence, entre 80°C et 250°C.

La seconde tubulure contient un réfrigérant qui évite l'évaporation du bain. Au moins une lame destinée à être usinée est introduite dans le bain liquide par la troisième tubulure.

Accrochée à un fil de platine, et tenue par une pince en teflon ou tout autre moyen de fixation résistant au bain, elle est immergée.

La dissolution se fait de préférence à la pression atmosphérique. Ces conditions de température et de pression facilitent la mise en oeuvre du procédé. Cela permet d'en abaisser le coût. L'épaisseur de matériau à retirer sur une lame de résonateur est généralement faible. On peut envisager de réaliser l'attaque dans un autoclave à faible pression et température supérieure à 250°C lorsque que l'on veut augmenter la vitesse de dissolution.

Les solvants du quartz utilisés sont des hydroxydes ou des fluorures alcalins, ou des mélanges de ces composés. L'hydroxyde d'ammonium peut également être utilisé. Toutefois, dans le cas des hydroxydes, on peut constituer le bain avec des carbonates ou des borates alcalins et non pas directement des hydroxydes. Les borates et carbonates en solution dans l'eau sont en effet hydrolysés dans les conditions de l'opération et conduisent aux hydroxydes correspondants. Par exemple, $Na_2CO_3$ sera hydrolysé en NaOH.

L'utilisation de mélanges de composés (hydroxydes et/ou fluorures) présente l'avantage de conduire à des eutectiques pouvant présenter des points de fusion plus bas que celui des composés purs. Ils sont donc préférés ici.

Dans les exemples les proportions des constituants du bain sont des pourcentages en poids.

EXEMPLE N° 1 :
Le bain est constitué, avant dissolution, de :
NaOH : 70 %
LiOH : 10 %
$H_2O$ : 20 %

A la température de 140 °C, la vitesse de dissolution est d'environ 2 micromètres par heure. Les lames testées ont été auparavant polies. On constate que la rugosité Ra initiale 0,01 micromètre est conservée tout au long de la dissolution.

EXEMPLE N° 2 :
Le bain est constitué, avant dissolution, de :
NaOH : 72 %
$H_2O$ : 20 %
$SiO_2$, $nH_2O$ : 8 % (acide silicique)

A la température de 200 °C, la vitesse de dissolution est d'environ 7 micromètres par heure. Les lames testées sont rodées, leur rugosité est voisine de 0,17 micromètre. On constate une amélioration et la rugosité finale obtenue est de l'ordre de 0,05 micromètre

EXEMPLE N° 3 :
Le bain est constitué, avant dissolution, de :
KOH : 80%
$H_2O$ : 20%
Température du bain : 195°C
Vitesse de dissolution : 6 micromètres/heure
Rugosité intiale : échantillon poli Ra = 0,01 micromètre
Rugosité finale : 0,01 micromètre

EXEMPLE N° 4 :
Le bain est constitué, avant dissolution de :
NaOH : 40%
KOH : 40%
$H_2O$ : 20%
Température du bain : 200°C
Vitesse de dissolution : 10 micromètres/heure
Rugosité initiale : échantillon rodé Ra = 0,17μm.
Rugosité finale : 0,04 μm

EXEMPLE N° 5 :
Le bain est constitué, avant dissolution, de :
NaOH : 70%
NaF : 20%
$H_2O$ : 10%
Température du bain : 180°C
Vitesse de dissolution : 11 micromètres/heure
Rugosité initiale : échantillon poli Ra = 0,01 μm.
Rugosité finale : 0,01 μm

EXEMPLE N° 6 :

Le bain est constitué, avant dissolution de :

NaOH : 60%

$NH_4F$ : 30%

$H_2O$ : 10%

Température du bain : 150°C

Vitesse de dissolution : 3 micromètres/heure

Rugosité initiale : échantillon rodé Ra = 0,17µm.

Rugosité finale : 0,06 µm

EXEMPLE N° 7 :

Le bain est constitué, avant dissolution, de :

KOH : 70%

$Na_2SiO_3$ : 10%

$H_2O$ : 20%

Température du bain : 175°C

Vitesse de dissolution : 4 micromètres/heure

Rugosité initiale : échantillon poli Ra = 0,01 µm.

Rugosité finale : 0,01 µm

A partir de lames (épaisseur initiale 80 microns) issues de ces exemples, on a pu réaliser des résonateurs de fréquence 50 MHz (épaisseur finale 34 microns, soit une dissolution de 23 microns par face) dont les caractéristiques électriques sont les suivantes :

F = 46,485 MHz

R = 15 ohms (à l'air)

L = 3,7 mH

Q = 69000,

soit une valeur du produit $Q * F = 3 \ 10^{12}$ , ce qui est très performant comparé à l'amincissement ionique.

Le procédé de dissolution contrôlée selon l'invention peut servir pour réaliser des lames de résonateur piézoélectrique. La lame de quartz peut être amincie dans au moins une zone pour atteindre une fréquence de résonance désirée.

Le procédé de dissolution contrôlée selon l'invention peut servir à creuser au moins une ouverture à travers une lame de quartz. Une telle lame peut servir de capteur. Les principaux domaines sont les capteurs de température, de force, de pression, etc ...

Le procédé de dissolution contrôlée selon l'invention peut être utilisé aussi pour découper aux cotes désirées les bords d'une lame de quartz.

Si la lame doit être attaquée partiellement, on peut la recouvrir d'un masque destiné à protéger une partie de cette dernière.

Le masque peut être en résine, en métal ou en d'autres matériaux n'étant pas attaqués par le bain.

## Revendications

1. Procédé de dissolution contrôlée de lames de quartz conduisant à un état de surface correct, dans un bain basique chaud contenant un solvant ou un mélange de solvants du quartz, caractérisé en ce que le bain comprend un hydroxyde ou un fluorure d'un alcalin, ou un hydroxyde d'ammonium, ou un mélange de ces composés, la dissolution se faisant à pression atmosphérique, un réfrigérant étant prévu pour éviter l'évaporation du bain.

2. Procédé selon la revendication 1, caractérisé en ce que le bain comprend également un composé silicié soluble.

3. Procédé selon l'une des revendications 1 et 2, caractérisé en ce que l'alcalin est le lithium, le potassium ou le sodium.

4. Procédé selon l'une des revendications 1 à 3, caractérisé en ce que lorsque le bain contient un fluorure alcalin, il comprend aussi un hydroxyde de lithium, sodium, potassium ou ammonium limitant l'agressivité du bain.

5. Procédé selon l'une des revendications précédentes, caractérisé en ce que la présence d'hydroxyde dans le bain résulte de l'hydrolyse de borates ou de carbonates d'un alcalin ou d'ammonium utilisés pour préparer le bain.

6. Procédé selon l'une des revendications précédentes, caractérisé en ce que le bain, avant dissolution du quartz, contient du silicium, la concentration molaire de cet élément étant supérieure à zéro et inférieure à la concentration molaire dudit élément qu'aurait le bain à saturation, dans les conditions de température et de pression de la dissolution.

7. Procédé selon l'une des revendications 1 à 6, caractérisé en ce que la dissolution est effectuée à une température comprise entre 80°C et 250°C.

8. Procédé selon l'une des revendications précédentes, caractérisé en ce qu'il est utilisé pour découper les bords d'une lame de quartz.

9. Procédé selon l'une des revendications 1 à 8, caractérisé en ce qu'il est utilisé pour amincir au moins une zone d'une lame de quartz.

10. Procédé selon l'une des revendications précédentes, caractérisé en ce qu'il est utilisé pour creuser au moins une ouverture à travers une lame de quartz.

11. Procédé selon l'une des revendications 8 à 10, caractérisé en ce que la lame est recouverte d'un masque pour protéger certaines parties.

12. Procédé selon l'une des revendications 1 à 11, caractérisé en ce que le bain contient entre 10 et 20 % en poids d'eau.

## Claims

1. Process for the controlled dissolution of quartz plates, leading to a correct surface condition, in a hot basic bath containing a solvent or a mixture of solvents of quartz, characterized in that the bath comprises a hydroxide or a fluoride of an alkali metal, or an ammonium hydroxide, or a mixture of these compounds, dissolution taking place at atmospheric pressure, a refrigerant being provided to prevent evaporation of the bath.

2. Process according to Claim 1, characterized in that the bath also comprises a soluble silicious compound.

3. Process according to one of Claims 1 and 2, characterized in that the alkali metal is lithium, potassium or sodium.

4. Process according to one of Claims 1 to 3, characterized in that, when the bath contains an alkali metal fluoride, it also comprises a lithium, sodium, potassium or ammonium hydroxide limiting the corrosive power of the bath.

5. Process according to one of the preceding claims, characterized in that the presence of hydroxide in the bath results from the hydrolysis of alkali metal or ammonium borates or carbonates used to prepare the bath.

6. Process according to one of the preceding claims, characterized in that, before dissolution of the quartz, the bath contains silicon, the molar concentration of this element being greater than zero and less than the molar concentration of the said element which the bath would have at saturation, under the temperature and pressure conditions of the dissolution.

7. Process according to one of Claims 1 to 6, characterized in that the dissolution is carried out at a temperature of between 80°C and 250°C.

8. Process according to one of the preceding claims, characterized in that it is used to cut the edges of a quartz plate.

9. Process according to one of Claims 1 to 8, characterized in that it is used to thin at least one region of a quartz plate.

10. Process according to one of the preceding claims, characterized in that it is used to hollow at least one opening through a quartz plate.

11. Process according to one of Claims 8 to 10, characterized in that the plate is covered with a mask to protect some parts.

12. Process according to one of Claims 1 to 11, characterized in that the bath contains between 10 and 20 % by weight of water.

## Patentansprüche

1. Verfahren zum kontrollierten Abätzen von Quarzplättchen, das einen korrekten Oberflächenzustand ergibt, in einem heißen basischen Bad, das ein Lösungsmittel oder eine Mischung von Lösungsmitteln für den Quarz enthält, dadurch gekennzeichnet, daß das Bad ein Hydroxid oder ein Fluorid eines Alkalimetalls oder ein Ammoniumhydroxid oder eine Mischung dieser Verbindungen enthält, wobei das Abätzen bei Atmosphärendruck erfolgt und ein Kühlmittel vorgesehen ist, um die Verdampfung des Bades zu verhindern.

2. Verfahren nach Anspruch 1, dadurch gekennzeichnet, daß das Bad weiter eine lösbare siliziumhaltige Verbindung enthält.

3. Verfahren nach einem der Ansprüche 1 und 2, dadurch gekennzeichnet, daß das Alkalimetall Lithium, Kalium oder Natrium ist.

4. Verfahren nach einem der Ansprüche 1 bis 3, dadurch gekennzeichnet, daß das Bad, wenn es ein Alkalifluorid enthält, weiter ein Lithium-, Natrium-, Kalium- oder Ammoniumhydroxid enthält, um die Aggressivität des Bads in Grenzen zu halten.

5. Verfahren nach einem der vorhergehenden Ansprüche, dadurch gekennzeichnet, daß das Vorhandensein eines Hydroxids im Bad aus der Hydrolyse von Boraten oder Karbonaten eines Alkalimetalls oder von Ammonium resultiert, die für die Herstellung des Bads verwendet wurden.

6. Verfahren nach einem der vorhergehenden Ansprüche, dadurch gekennzeichnet, daß das Bad vor dem Abätzen des Quarzes Silizium enthält, wobei die molare Konzentration dieses Elements größer als 0 und kleiner als die molare Konzentration des Elements ist, die das Bad im Sättigungszustand hätte, und zwar unter den Temperatur- und Druckbedingungen des Ätzprozesses.

7. Verfahren nach einem der Ansprüche 1 bis 6, dadurch gekennzeichnet, daß das Abätzen bei einer Temperatur zwischen 80°C und 250°C erfolgt.

8. Verfahren nach einem der vorhergehenden Ansprüche, dadurch gekennzeichnet, daß es verwendet wird, um die Ränder eines Quarzplättchens abzuschneiden.

9. Verfahren nach einem der Ansprüche 1 bis 8, dadurch gekennzeichnet, daß es verwendet wird, um mindestens eine Zone eines Quarzplättchens dünner zu machen.

10. Verfahren nach einem der vorhergehenden Ansprüche, dadurch gekennzeichnet, daß es verwendet wird, um mindestens eine Öffnung durch ein Quarzplättchen hindurch zu erzeugen.

11. Verfahren nach einem der Ansprüche 8 bis 10, dadurch gekennzeichnet, daß das Plättchen mit einer Maske bedeckt wird, um bestimmte Bereiche zu schützen.

12. Verfahren nach einem der Ansprüche 1 bis 11, dadurch gekennzeichnet, daß das Bad zwischen 10 und 20 Gewichtsprozent an Wasser enthält.